# EUROPEAN PATENT SPECIFICATION

(11) **EP 3 850 883 B1**
(45) Date of publication and mention of the grant of the patent: **04.12.2024**
(21) Application number: 19804895.1
(22) Date of filing: 15.10.2019
(51) Int. Cl.: H04W 16/14

(54) **DISTRIBUTED RADIO FREQUENCY SPECTRUM SHARING COORDINATION SYSTEM**
VERTEILTES KOORDINIERUNGSSYSTEM ZUR GEMEINSAMEN NUTZUNG DES FUNKFREQUENZSPEKTRUMS
SYSTÈME DE COORDINATION DE PARTAGE DE SPECTRE RADIOFRÉQUENCE DISTRIBUÉ

(30) Priority: 24.10.2018 US 201816169374
(43) Date of publication of application: 21.07.2021
(73) Proprietor: Motorola Solutions, Inc., Chicago, IL 60661 (US)
(72) Inventor: ECONOMY, George R., Arlington Heights, Illinois 60004 (US); SENESE, Thomas J., Schaumburg, Illinois 60173 (US); YANG, Yunhai, Elgin, Illinois 60124 (US)
(74) Representative: Wojakiewicz, Aleksandra
(86) International application number: PCT/US2019/056293
(87) International publication number: WO 2020/086335

(56) References cited:
- WO-A1-2013/154600
- WO-A1-2013/166472
- US-B2- 9 351 282
- US-B2- 9 629 020
- ANONYMOUS: "Blockchain basics: Introduction to distributed ledgers - IBM Developer", DEVELOPER.IBM.COM, 23 October 2018 (2018-10-23), pages 1 - 11, XP093134168, Retrieved from the Internet <URL:https://web.archive.org/web/20181023072021/https://developer.ibm.com/tutorials/cl-blockchain-basics-intro-bluemix-trs/> [retrieved on 20240222]

## Description

### BACKGROUND OF THE INVENTION

Radio frequency spectrum allocated for wireless communications is a limited resource. Some of the available radio frequency spectrum is assigned to different users and communication modes. Other portions of the available radio frequency spectrum are shared and allocated dynamically among users, allowing systems to increase capacity as needed. Existing systems to dynamically allocate radio frequency spectrum such as the Google Spectrum Access System (SAS) utilize a centralized ledger.

WO 2013/154600 A1 discloses an example system and method for radio frequency spectrum allocation.

### BRIEF DESCRIPTION OF THE SEVERAL VIEWS OF THE DRAWINGS

The accompanying figures, where like reference numerals refer to identical or functionally similar elements throughout the separate views, together with the detailed description below, are incorporated in and form part of the specification, and serve to further illustrate embodiments of concepts that include the claimed invention, and explain various principles and advantages of those embodiments.
FIG. 1 is a diagram of a distributed spectrum sharing coordination system, in accordance with some embodiments.
FIG. 2 is a diagram of a spectrum broker server included in the distributed spectrum sharing coordination system of FIG. 1, in accordance with some embodiments.
FIG. 3 is a flowchart of a method for determining and allocating available radio frequency spectrum, in accordance with some embodiments.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

The apparatus and method components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

### DETAILED DESCRIPTION OF THE INVENTION

Available radio frequency spectrum is allocated for wireless communications. Some of the available radio frequency spectrum is permanently reserved for particular communication modes or assigned to particular users. Some of the radio frequency spectrum is designated as shared spectrum, for use by multiple users. A portion of the shared spectrum is dynamically allocated to users. For example, the Citizens Broadband Radio Service (CBRS) dynamically allocates spectrum in the 3.5 GHz band to, among other users, cellular networks. The CBRS uses a centralized control system for spectrum assignment (the Spectrum Access System (SAS)). However, a centralized control system for spectrum assignment leads to a lack of transparency regarding which allocation decisions are made and why. Such systems also lack control over prioritizing public safety users' needs.

Therefore, systems and methods are provided herein for, among other things, distributed radio frequency spectrum sharing. Embodiments described herein provide systems and methods for, among other things, dynamically allocating spectrum to one or more spectrum-consuming entities by utilizing a weighted voting mechanism. Using such embodiments, spectrum is made available, and spectrum-consuming entities submit requests to use the spectrum. Validation nodes (other spectrum-consuming agencies, regulatory agencies, and the like) vote on requests and allocations of spectrum are made by consensus. Because validation nodes are weighted, certain spectrum-consuming entities, for example, public safety agencies, may be given a higher priority with weighted votes having a larger weight than a spectrum-consuming entity that is not a public safety agency. Allocations of spectrum are submitted, requested, and assigned using distributed ledger, for example, a blockchain ledger. As a consequence, embodiments described herein result in a system for dynamically allocating spectrum to one or more spectrum-consuming entities in a transparent fashion, while accounting for the needs of public safety and other priority users.

One example embodiment provides a system to dynamically allocate radio frequency spectrum. The system includes a spectrum broker server including a communications interface and an electronic processor. The electronic processor is configured to determine an available radio frequency spectrum allocation. The electronic processor is configured to receive a spectrum request for the available radio frequency spectrum allocation at the communications interface, wherein the spectrum request is associated with a spectrum-consuming entity. The electronic processor is configured to receive, from a plurality of validation nodes, a plurality of votes based on the spectrum request. The electronic processor is configured to determine whether to grant the spectrum request based on the plurality of votes. The electronic processor is configured to, responsive to determining to grant the spectrum request, allocate the available radio frequency spectrum allocation to the spectrum-consuming entity. The electronic processor is further configured to determine the available radio frequency spectrum allocation by retrieving, from a distributed ledger containing radio frequency spectrum information, a first transaction including a proposed radio frequency spectrum allocation from the distributed ledger; receiving, via the communication interface, a plurality of votes on the proposed radio frequency spectrum allocation from the plurality of validation nodes; and determining, based on the plurality of votes on the proposed radio frequency spectrum allocation, whether to make the proposed radio frequency spectrum allocation available for requests.

Another example embodiment provides a method for dynamically allocating radio frequency spectrum. The method includes determining, with an electronic processor, an available radio frequency spectrum allocation. The method includes receiving a spectrum request for the available radio frequency spectrum from a spectrum-consuming entity. The method includes receiving, from a plurality of validation nodes, a plurality of votes based on the spectrum request. The method includes determining whether to grant the spectrum request based on the plurality of votes. The method includes, responsive to determining to grant the spectrum request, allocating the available radio frequency spectrum allocation to the spectrum-consuming entity. Herein determining the available radio frequency spectrum allocation includes retrieving, from a distributed ledger containing radio frequency spectrum information, a first transaction including a proposed radio frequency spectrum allocation from the distributed ledger; receiving a plurality of votes on the proposed radio frequency spectrum allocation from the plurality of validation nodes; and determining, based on the plurality of votes on the proposed radio frequency spectrum allocation, whether to make the proposed radio frequency spectrum allocation available for requests.

For ease of description, some or all of the example systems presented herein are illustrated with a single exemplar of each of its component parts. Some examples may not describe or illustrate all components of the systems. Other example embodiments may include more or fewer of each of the illustrated components, may combine some components, or may include additional or alternative components.

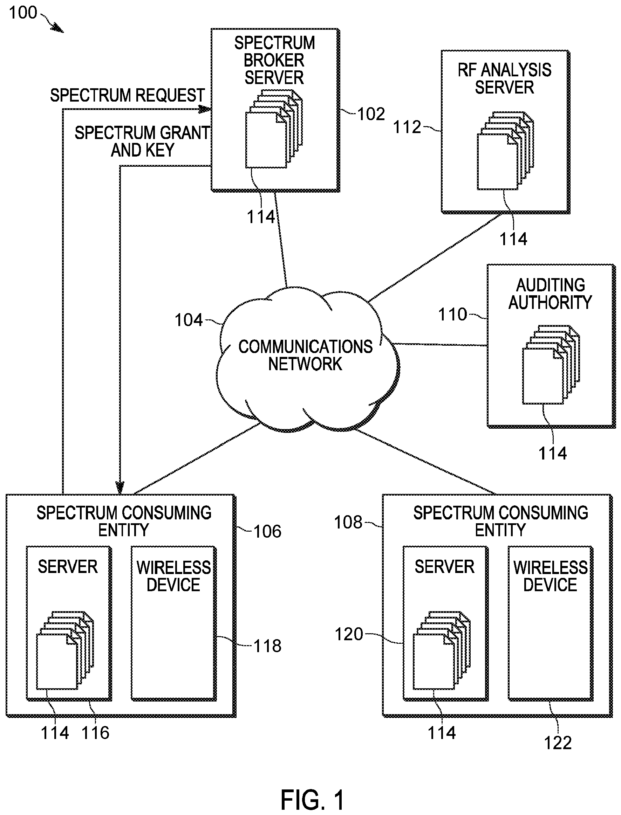

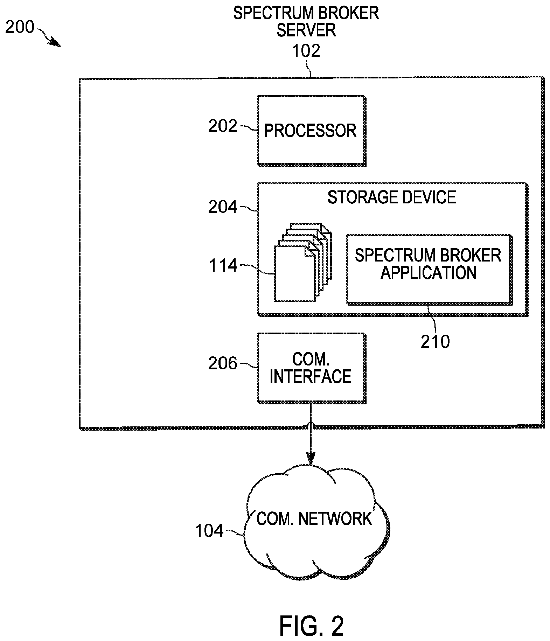

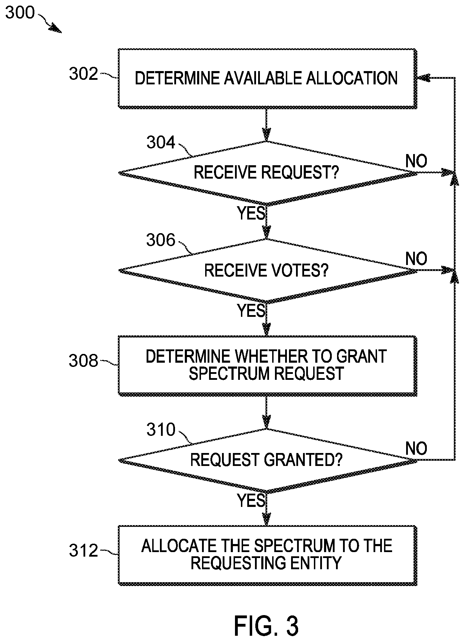

FIG. 1 illustrates an example distributed spectrum sharing coordination system 100. The distributed spectrum sharing coordination system 100 includes a spectrum broker server 102, described more particularly below with respect to FIG. 2. The spectrum broker server 102 is connected via a communications network 104 to two spectrum-consuming entities 106 and 108, an auditing authority 110, and a radio frequency analysis server 112. In some embodiments, the communications network 104 may be a peer to peer (P2P) network. The spectrum broker server 102 includes a copy of a distributed ledger 114 shared by each of the spectrum-consuming entities 106, 108, the auditing authority 110, and the radio frequency analysis server 112. The distributed ledger 114 includes information regarding the spectrum allocation and will be described more particularly below with respect to FIG. 3.

As illustrated in FIG. 1, the spectrum-consuming entities 106, 108 include servers 116, 120 and wireless devices 118, 122. The wireless devices 118, 122 are any of a plurality of known devices for communicating wirelessly to one another or over additional communications networks (not shown) operated by the spectrum-consuming entity. In some embodiments, one or both of the wireless devices 118, 122 are smart telephones. The servers 116, 120 of spectrum-consuming entity 106, 108 store information including at least the distributed ledger 114. Components of each of the servers 116, 120, the auditing authority 110, and the radio frequency analysis server 112 are similar to those described below with respect to the spectrum broker server 102, and perform similar functions. It should be noted that FIG. 1 is simply an example embodiment of the distributed spectrum sharing coordination system 100 and other embodiments may include more or less components including more or less spectrum-consuming entities 106, 108.

FIG. 2 schematically illustrates a spectrum broker server system 200 for describing the spectrum broker server 102 in more detail. As described below with respect to FIG. 3, the spectrum broker server may determine an available radio frequency spectrum allocation, determine whether to grant an allocation request, and allocate spectrum to a spectrum-consuming entity 106, 108 upon granting a spectrum request. In the example provided, the spectrum broker server 102 includes an electronic processor 202, a storage device 204, and a communication interface 206. The electronic processor 202, the storage device 204, and the communication interface 206 communicate over one or more communication lines or buses, wirelessly, or a combination thereof.

The electronic processor 202 may include a microprocessor, application-specific integrated circuit (ASIC), or another suitable electronic device. The electronic processor 202 obtains and provides information (for example, from the storage device 204 and/or the communication interface 206), and processes the information by executing one or more software instructions or modules, capable of being stored, for example, in a random access memory ("RAM") area of the storage device 204 or a read only memory ("ROM") of the storage device 204 or another non-transitory computer readable medium (not shown). The software can include firmware, one or more applications, program data, filters, rules, one or more program modules, and other executable instructions. The electronic processor 202 is configured to retrieve from the storage device 204 and execute, among other things, software related to the control processes and methods described herein.

The storage device 204 can include one or more non-transitory computer-readable media, and includes a program storage area and a data storage area. The program storage area and the data storage area can include combinations of different types of memory, as described herein. In the embodiment illustrated, the storage device 204 stores, among other things, a copy of the distributed ledger 114 (described in detail below) and a spectrum broker application 210. As described in detail below the spectrum broker application 210 assigns radio frequency spectrum, records smart wallet entries, and receives and records a consensus from the auditing authority 110.

The communication interface 206 may include a transceiver (for example, a Wi-Fi or Ethernet transceiver) for communicating over one or more wired or wireless communication networks or connections.

As noted, there is a need for a system for allocating radio frequency spectrum in a transparent and secure fashion while prioritizing spectrum allocation for public safety agencies and other high priority users. FIG. 3 illustrates an example method 300 for dynamically allocating spectrum to one or more spectrum-consuming entities. The method 300 is described as being performed by the spectrum broker server 102 and, in particular, the electronic processor 202. However, it should be understood that in some embodiments, portions of the method 300 may be performed by other devices, including for example, the auditing authority 110 or the radio frequency analysis server 112.

As illustrated in FIG. 3, at block 302, the electronic processor 202 determines an available allocation of radio frequency spectrum for specific time slots. In some embodiments, the electronic processor 202 determines an available allocation by selecting an underutilized spectrum allocation selected from a plurality of existing spectrum allocations. The radio frequency analysis server 112 analyzes spectrum activities and identifies potential availability opportunities such as underutilized spectrum allocations (for example, based on historical usage patterns). In some embodiments, an underutilized spectrum allocation may be an unutilized spectrum allocation. In some embodiments, the radio frequency analysis server 112 also determines whether an underutilized spectrum allocation is free of interference, or how likely it is that interference may occur at the location of the underutilized spectrum allocation. The radio frequency analysis server 112 then records this information in the distributed ledger 114.

The distributed ledger 114 contains radio frequency spectrum information. The distributed ledger 114 is a decentralized ledger utilizing, for example, blockchain technology. Because the components of the system 100 utilize the distributed ledger 114, every user knows that the information on the distributed ledger 114 has not been changed without the proper permissions or authority. The distributed ledger 114 is decentralized, so that all users have access to the information on the distributed ledger 114. The radio frequency spectrum information stored in the distributed ledger 114 is not limited to available radio frequency spectrum, but may additionally contain a transaction history for spectrum allocations made by the spectrum broker server (for example, information about past transactions and financial transactions linked to the spectrum allocation transactions). The listing of past transactions on the distributed ledger 114 helps the auditing authority 110 during audits of interference complaints and other regulatory needs. Because the distributed ledger 114 is universally accessible there is more transparency than in a CBRS SAS system using a centralized ledger.

In some embodiments, the distributed ledger 114 stores spectrum assignment information. A spectrum assignment record may include information about an owner of the spectrum, a spectrum frequency, rules about the spectrum allocation (for example, a time at which the spectrum is allocated, a length of time for the spectrum allocation (for example, when the spectrum allocation expires), or a priority level for spectrum allocation), a spectrum assignment ID, a service area, a transmission power level or power output, and a call sign. In some embodiments, the distributed ledger 114 stores one or more smart contracts for spectrum allocation. Smart contracts contain rules for allocation requests, selection of validation nodes based on the nature of a radio frequency request (for example, permanent, temporary, public safety, and the like), and authorizing validation nodes based on the nature of the request. In some embodiments, the distributed ledger 114 includes smart wallet information, for example, a balance available to pay for a spectrum fee and permissions for spectrum usage criteria.

At block 304, the spectrum broker server 102 receives a request for one of the time slots from a spectrum-consuming entity. The request may be a bid for a time slot. The bid may include additional information, for example, the identity of the spectrum-consuming entity, financial information, a requested time slot, and the service area requested. For example, the bid may be for a geographic area around an airport from 1PM to 8 PM. In some embodiments, the radio frequency analysis server 112 uses the bid information to check for frequency reuse opportunities.

At block 306, the spectrum broker server 102 receives a plurality of votes from a plurality of validation nodes. In some embodiments, the votes are weighted based on factors to generate a plurality of weighted votes based on the plurality of votes and the weight for each of the plurality of votes. For example, the electronic processor 202 assigns a weight to each of the plurality of votes based on at least one factor. Factors considered include but are not limited to the owner of the leasing spectrum, an interference analysis (for example, as determined by the radio frequency analysis server 112), equipment capability, a spectrum-consuming entity type (for example, a public safety agency), a user type (for example, a public safety officer), a business rule, a desired operation area, and a power output (for example, for the spectrum-consuming entity making the request). For example, a vote of the owner of the leasing spectrum or of a public safety agency may be weighted more heavily than a vote from a validation node that is neither of these.

While for some requests all of the plurality of validation nodes may be allowed to vote, for other requests only certain validation nodes may have a vote. Different validation nodes may vote based on a tier associated with the usage of the requested frequency as well as the time slot being requested. For example, more validation nodes may be able to vote for lower priority spectrum at a lower priority time slot, but less validation nodes may be able to vote on a higher priority spectrum for a higher priority time slot. In another example, a set of validation nodes may vote on long term allocations of spectrum while a different set of validation nodes may vote on short term allocations.

At block 308, the spectrum broker server 102 determines whether to grant the spectrum request. A spectrum request may be accepted by the spectrum broker server 102 when a consensus is reached between the plurality of validation nodes based on a plurality of votes, which, in some embodiments, are weighted votes. A consensus may depend on a tier of a request for spectrum allocation. For example, a high tier request may require 100% approval from all of the validation nodes while a low tier request may require a 51 % approval from the validation nodes assigned to vote on the spectrum allocation. Other embodiments may include different tiers of requests other than a high tier request or a low tier request with different levels of approval required from voting validation nodes.

A smart contract may obtain the rules for selecting validation nodes based on the nature of the spectrum request and check in and out of the spectrum for a spectrum-consuming entity 106, 108, which may satisfy a consensus decision. The smart contract tracks previous transaction records stored on the distributed ledger 114 as well as financial information to find the best user for the spectrum. Upon finding a spectrum-consuming entity 106, 108 which satisfies the consensus decision, the smart contract may allocate the spectrum to the spectrum-consuming entity 106, 108. Allocating the spectrum to the spectrum-consuming entity 106, 108 may require the spectrum-consuming entity 106, 108 to accept a plurality of conditions associated with the spectrum allocation. In some embodiments, the spectrum request includes an indication that the plurality of conditions are accepted. In some embodiments, the plurality of conditions is included in the smart contract. The spectrum-consuming entity 106, 108 may have a linked smart wallet including a balance available to pay for a spectrum fee, and this financial information may be saved to the distributed ledger 114.

At block 310, if a request is granted, the spectrum broker server 102 moves to block 312 to allocate the spectrum for the requested time slot to the requesting spectrum-consuming entity 106, 108. If the request is not granted, the spectrum broker server 102 resumes determining an available radio frequency spectrum and waiting for a spectrum request and votes from the plurality of validation nodes.

At block 312, the spectrum broker server 102 allocates the requested spectrum to the spectrum-consuming entity 106, 108. In some embodiments, the spectrum broker server 102 associates the assigned spectrum to the spectrum-consuming entity through cryptographic methods, and updates the distributed ledger 114 with the new spectrum allocation information. In some embodiments, the cryptographic methods include an authentication key used to generate a base station identifier (BSID), which is broadcast from a base station of a spectrum-consuming entity 106, 108. For example, the spectrum broker server 102, responsive to determining to grant the spectrum request, transmits an authentication key (for example, an encrypted hash key) associated with the available radio frequency spectrum allocation to the spectrum-consuming entity. In some embodiments, a trust chain may be embedded down to the level of base stations, call controllers, and wireless devices. In such embodiments, illegal or promiscuous devices are not able to join the system. In addition, the auditing authority 110 may gather information about the allocation by querying the distributed ledger 114 to ensure the accuracy of the allocation. In some embodiments, the auditing authority 110 may be actively notified of a spectrum transaction by one of the spectrum-consuming entities 106, 108 or the spectrum broker server 102. Embodiments such as these provide for a secure allocation of the radio frequency spectrum.

In some embodiments, the electronic processor 202 determines an available allocation of radio frequency spectrum by selecting a radio frequency spectrum made available by system owners or an entity such as the spectrum broker server 102 by announcing available radio frequency spectrum and time slots in the distributed ledger 114. According to the invention, the electronic processor 202 retrieves, from the distributed ledger 114, a first transaction including a proposed radio frequency spectrum allocation. The electronic processor 202 receives (for example, via the communication interface 206), a plurality of votes on the proposed radio frequency spectrum allocation from a plurality of validation nodes. The electronic processor 202 determines based on the plurality of votes on the proposed radio frequency spectrum allocation, whether to make the proposed radio frequency spectrum allocation available for requests via the distributed ledger 114.

In the foregoing specification, specific embodiments have been described. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of present teachings.

The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims.

Moreover in this document, relational terms such as first and second, top and bottom, and the like may be used solely to distinguish one entity or action from another entity or action without necessarily requiring or implying any actual such relationship or order between such entities or actions. The terms "comprises," "comprising," "has," "having," "includes," "including," "contains," "containing" or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element proceeded by "comprises ... a," "has ... a," "includes ... a," or "contains ... a" does not, without more constraints, preclude the existence of additional identical elements in the process, method, article, or apparatus that comprises, has, includes, contains the element. The terms "a" and "an" are defined as one or more unless explicitly stated otherwise herein. The terms "substantially," "essentially," "approximately," "about" or any other version thereof, are defined as being close to as understood by one of ordinary skill in the art, and in one non-limiting embodiment the term is defined to be within 20%, in another embodiment within 10%, in another embodiment within 2% and in another embodiment within 1%. The term "coupled" as used herein is defined as connected, although not necessarily directly and not necessarily mechanically. A device or structure that is "configured" in a certain way is configured in at least that way, but may also be configured in ways that are not listed.

It will be appreciated that some embodiments may be comprised of one or more generic or specialized processors (or "processing devices") such as microprocessors, digital signal processors, customized processors and field programmable gate arrays (FPGAs) and unique stored program instructions (including both software and firmware) that control the one or more processors to implement, in conjunction with certain non-processor circuits, some, most, or all of the functions of the method and/or apparatus described herein. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used.

Moreover, an embodiment can be implemented as a computer-readable storage medium having computer readable code stored thereon for programming a computer (for example, comprising a processor) to perform a method as described and claimed herein. Examples of such computer-readable storage mediums include, but are not limited to, a hard disk, a CD-ROM, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory) and a Flash memory. Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

## Claims

1. A system (100) to allocate radio frequency spectrum, the system comprising:
a spectrum broker server (102) including
a communications interface; and
an electronic processor (202) configured to
determine an available radio frequency spectrum allocation;
receive a spectrum request for the available radio frequency spectrum allocation at the communications interface, wherein the spectrum request is associated with a spectrum-consuming entity (106);
receive, from a plurality of validation nodes, a plurality of votes based on the spectrum request;
determine whether to grant the spectrum request based on the plurality of votes; and
responsive to determining to grant the spectrum request, allocate the available radio frequency spectrum allocation to the spectrum-consuming entity (106);
**characterized in that**
the electronic processor (202) is further configured to determine the available radio frequency spectrum allocation by
retrieving, from a distributed ledger (114) containing radio frequency spectrum information, a first transaction including a proposed radio frequency spectrum allocation from the distributed ledger (114);
receiving, via the communication interface (206), a plurality of votes on the proposed radio frequency spectrum allocation from the plurality of validation nodes; and
determining, based on the plurality of votes on the proposed radio frequency spectrum allocation, whether to make the proposed radio frequency spectrum allocation available for requests.

2. The system (100) of claim 1, wherein
determining the available radio frequency spectrum allocation includes determining a plurality of conditions associated with the available radio frequency spectrum allocation; and
the spectrum request includes an indication that the plurality of conditions are accepted.

3. The system (100) of claim 2, wherein the plurality of conditions is included in a smart contract associated with the available radio frequency spectrum allocation.

4. The system (100) of claim 1, wherein the electronic processor (202) is further configured to, responsive to determining to grant the spectrum request, transmit an authentication key associated with the available radio frequency spectrum allocation to the spectrum-consuming entity (106).

5. The system (100) of claim 1, wherein the electronic processor (202) is further configured to determine the available radio frequency spectrum allocation by receiving, from a radio frequency analysis server (112), an underutilized spectrum allocation selected from a plurality of existing spectrum allocations.

6. The system (100) of claim 1, wherein the electronic processor (202) is further configured to:
assign a weight to each of the plurality of votes based on at least one factor selected from the group consisting of an owner of the spectrum, an interference analysis, an equipment capability, a spectrum-consuming entity (106) type, a user type, a business rule, a desired operation area, and a power output; and
generate a plurality of weighted votes based on the plurality of votes and the weight for each of the plurality of votes;
wherein determining whether to grant the spectrum request includes determining whether to grant the spectrum request based on the plurality of weighted votes.

7. The system (100) of claim 5, wherein the radio frequency spectrum information includes a transaction history for spectrum allocations made by the spectrum broker server (102).

8. The system (100) of claim 1, wherein the electronic processor (202) is further configured to receive the spectrum request for the available radio frequency spectrum allocation by retrieving, from a distributed ledger (114) containing radio frequency spectrum information, a transaction.

9. A method (300) to allocate radio frequency spectrum, the method (300) comprising:
determining, with an electronic processor (202), an available radio frequency spectrum allocation;
receiving a spectrum request for the available radio frequency spectrum from a spectrum-consuming entity (106);
receiving, from a plurality of validation nodes, a plurality of votes based on the spectrum request;
determining whether to grant the spectrum request based on the plurality of votes; and
responsive to determining to grant the spectrum request, allocating the available radio frequency spectrum allocation to the spectrum-consuming entity (106);
**characterized in that**
determining the available radio frequency spectrum allocation includes
retrieving, from a distributed ledger (114) containing radio frequency spectrum information, a first transaction including a proposed radio frequency spectrum allocation from the distributed ledger (114);
receiving a plurality of votes on the proposed radio frequency spectrum allocation from the plurality of validation nodes; and
determining, based on the plurality of votes on the proposed radio frequency spectrum allocation, whether to make the proposed radio frequency spectrum allocation available for requests.

10. The method (300) of claim 9, wherein
determining the available radio frequency spectrum allocation includes determining a plurality of conditions associated with the available radio frequency spectrum allocation; and
the spectrum request includes an indication that the plurality of conditions are accepted.

11. The method (300) of claim 9, further comprising:
responsive to determining to grant the spectrum request, transmitting an authentication key associated with the available radio frequency spectrum allocation to the spectrum-consuming entity (106).

12. The method (300) of claim 9, wherein determining the available radio frequency spectrum allocation includes receiving, from a radio frequency analysis server (112), an underutilized spectrum allocation selected from a plurality of existing spectrum allocations.

13. The method (300) of claim 9, further comprising:
assigning a weight to each of the plurality of votes based on at least one factor selected from the group consisting of an owner of the spectrum, an interference analysis, an equipment capability, a spectrum-consuming entity (106) type, a user type, a business rule, a desired operation area, and a power output; and
generating a plurality of weighted votes based on the plurality of votes and the weight for each of the plurality of votes;
wherein determining whether to grant the spectrum request includes determining whether to grant the spectrum request based on the plurality of weighted votes.

## Patentansprüche

1. System (100) zur Zuweisung eines Funkfrequenzspektrums, wobei das System Folgendes umfasst:
einen Spektrum-Broker-Server (102), der Folgendes aufweist:
eine Kommunikationsschnittstelle; und
einen elektronischen Prozessor (202), der für Folgendes konfiguriert ist:
Bestimmen einer Zuweisung des verfügbaren Funkfrequenzspektrums;
Empfangen einer Spektrumsanforderung für die Zuweisung des verfügbaren Funkfrequenzspektrums an der Kommunikationsschnittstelle, wobei die Spektrumsanforderung mit einer spektrumverbrauchenden Einheit (106) verbunden ist;
Empfangen, von einer Vielzahl von Validierungsknoten, einer Vielzahl von Stimmen auf der Grundlage der Spektrumsanforderung;
Bestimmen, ob die Spektrumsanforderung, basierend auf der Vielzahl der Stimmen, gewährt werden soll; und
als Reaktion auf die Bestimmung, die Spektrumsanforderung zu gewähren, Zuweisen des verfügbaren Funkfrequenzspektrums zu der spektrumverbrauchenden Einheit (106); **dadurch gekennzeichnet, dass**
der elektronische Prozessor (202) ferner so konfiguriert ist, dass er die Zuweisung des verfügbaren Funkfrequenzspektrums durch Folgendes bestimmt:
Abrufen, aus einem verteilten Hauptbuch (114), das Funkfrequenzspektrumsinformationen enthält, einer ersten Transaktion einschließlich einer vorgeschlagenen Zuweisung eines Funkfrequenzspektrums aus dem verteilten Hauptbuch (114);
Empfangen, über die Kommunikationsschnittstelle (206), einer Vielzahl von Stimmen über die vorgeschlagene Zuweisung des Funkfrequenzspektrums von der Vielzahl von Validierungsknoten; und
Bestimmen, auf der Grundlage der Vielzahl von Stimmen über die vorgeschlagene Zuweisung des Funkfrequenzspektrums, ob die vorgeschlagene Zuweisung des Funkfrequenzspektrums für Anforderungen verfügbar gemacht werden soll.

2. System (100) nach Anspruch 1, wobei
das Bestimmen der Zuweisung des verfügbaren Funkfrequenzspektrums das Bestimmen einer Vielzahl von Bedingungen, die mit der Zuweisung des verfügbaren Funkfrequenzspektrums verbunden sind, beinhaltet; und
die Spektrumsanforderung eine Angabe enthält, dass die Vielzahl von Bedingungen akzeptiert werden.

3. System (100) nach Anspruch 2, wobei die Vielzahl von Bedingungen in einem intelligenten Vertrag enthalten sind, der mit der Zuweisung des verfügbaren Funkfrequenzspektrums verbunden ist.

4. System (100) nach Anspruch 1, wobei der elektronische Prozessor (202) ferner so konfiguriert ist, dass er als Reaktion auf die Bestimmung, die Spektrumsanforderung zu gewähren, einen mit der Zuweisung des verfügbaren Funkfrequenzspektrums verbundenen Authentifizierungsschlüssel an die spektrumverbrauchende Einheit (106) überträgt.

5. System (100) nach Anspruch 1, wobei der elektronische Prozessor (202) ferner so konfiguriert ist, dass er die Zuweisung des verfügbaren Funkfrequenzspektrums bestimmt, indem er von einem Funkfrequenz-Analyseserver (112) eine nicht ausgelastete Spektrumszuweisung empfängt, die aus einer Vielzahl bestehender Spektrumszuweisungen ausgewählt wird.

6. System (100) nach Anspruch 1, wobei der elektronische Prozessor (202) ferner für Folgendes konfiguriert ist:
Zuweisen einer Gewichtung zu jeder der Vielzahl von Stimmen auf der Grundlage mindestens eines Faktors, der aus der Gruppe ausgewählt wird, die aus einem Eigentümer des Spektrums, einer Interferenzanalyse, einer Ausrüstungsfähigkeit, einem spektrumverbrauchenden Einheitstyp (106), einem Benutzertyp, einer Geschäftsregel, einem gewünschten Betriebsbereich und einer Ausgangsleistung besteht; und
Erzeugen einer Vielzahl von gewichteten Stimmen auf der Grundlage der Vielzahl von Stimmen und der Gewichtung für jede der Vielzahl von Stimmen;
wobei das Bestimmen, ob die Spektrumsanforderung gewährt werden soll, das Bestimmen einschließt, ob die Spektrumsanforderung auf der Grundlage der Vielzahl von gewichteten Stimmen gewährt werden soll.

7. System (100) nach Anspruch 5, wobei die Funkfrequenzspektrumsinformationen eine Transaktionshistorie für Spektrumszuweisungen durch den Spektrum-Broker-Server (102) umfassen.

8. System (100) nach Anspruch 1, wobei der elektronische Prozessor (202) ferner so konfiguriert ist, dass er die Spektrumsanforderung für die Zuweisung des verfügbaren Funkfrequenzspektrums empfängt, indem er aus einem verteilten Hauptbuch (114), das Funkfrequenzspektrumsinformationen enthält, eine Transaktion abruft.

9. Verfahren (300) zur Zuweisung eines Funkfrequenzspektrums, wobei das Verfahren (300) Folgendes umfasst:
Bestimmen, mit einem elektronischen Prozessor (202), einer Zuweisung eines verfügbaren Funkfrequenzspektrums;
Empfang einer Spektrumsanforderung für das verfügbare Funkfrequenzspektrum von einer spektrumverbrauchenden Einheit (106);
Empfang, von einer Vielzahl von Validierungsknoten, einer Vielzahl von Stimmen auf der Grundlage der Spektrumsanforderung;
Bestimmen, ob die Spektrumsanforderung auf der Grundlage der Vielzahl von Stimmen gewährt werden soll; und
als Reaktion auf das Bestimmen, die Spektrumsanforderung zu gewähren, Zuweisen des verfügbaren Funkfrequenzspektrums an die spektrumverbrauchende Einheit (106);
**dadurch gekennzeichnet, dass**
das Bestimmen der Zuweisung des verfügbaren Frequenzspektrums Folgendes beinhaltet:
Abrufen, aus einem verteilten Hauptbuch (114), das Funkfrequenzspektrumsinformationen enthält, einer ersten Transaktion einschließlich einer vorgeschlagenen Zuweisung eines Funkfrequenzspektrums aus dem verteilten Hauptbuch (114);
Empfangen einer Vielzahl von Stimmen über die vorgeschlagene Zuweisung des Funkfrequenzspektrums von der Vielzahl der Validierungsknoten; und
Bestimmen, auf der Grundlage der Vielzahl von Stimmen über die vorgeschlagene Zuweisung des Funkfrequenzspektrums, ob die vorgeschlagene Zuweisung des Funkfrequenzspektrums für Anforderungen verfügbar gemacht werden soll.

10. Verfahren (300) nach Anspruch 9, wobei
das Bestimmen der Zuweisung des verfügbaren Funkfrequenzspektrums das Bestimmen einer Vielzahl von Bedingungen, die mit der Zuweisung des verfügbaren Funkfrequenzspektrums verbunden sind, beinhaltet; und
die Spektrumsanforderung eine Angabe enthält, dass die Vielzahl von Bedingungen akzeptiert werden.

11. Verfahren (300) nach Anspruch 9, das ferner Folgendes umfasst:
als Reaktion auf das Bestimmen, die Spektrumsanforderung zu gewähren, Übertragen eines mit der Zuweisung des verfügbaren Funkfrequenzspektrums verbundenen Authentifizierungsschlüssels an die spektrumverbrauchende Einheit (106).

12. Verfahren (300) nach Anspruch 9, wobei das Bestimmen der Zuweisung des verfügbaren Funkfrequenzspektrums das Empfangen, von einem Funkfrequenzanalyseserver (112), einer nicht ausgelasteten Spektrumszuweisung, die aus einer Vielzahl bestehender Spektrumszuweisungen ausgewählt wird, umfasst.

13. Verfahren (300) nach Anspruch 9, das ferner Folgendes umfasst:
Zuweisen einer Gewichtung zu jeder der Vielzahl von Stimmen auf der Grundlage mindestens eines Faktors, der aus der Gruppe ausgewählt wird, die aus einem Eigentümer des Spektrums, einer Interferenzanalyse, einer Ausrüstungsfähigkeit, einem spektrumverbrauchenden Einheitstyp (106), einem Benutzertyp, einer Geschäftsregel, einem gewünschten Betriebsbereich und einer Ausgangsleistung besteht; und
Erzeugen einer Vielzahl von gewichteten Stimmen auf der Grundlage der Vielzahl von Stimmen und der Gewichtung für jede der Vielzahl von Stimmen;
wobei das Bestimmen, ob die Spektrumsanforderung gewährt werden soll, das Bestimmen einschließt, ob die Spektrumsanforderung auf der Grundlage der Vielzahl von gewichteten Stimmen gewährt werden soll.

## Revendications

1. Système (100) permettant d'attribuer un spectre de radiofréquences, le système comprenant :
un serveur courtier de spectre (102) comprenant une interface de communication ; et
un processeur électronique (202) configuré pour
déterminer une attribution de spectre de radiofréquences disponible ;
recevoir une demande de spectre pour l'attribution de spectre de radiofréquences disponible au niveau de l'interface de communication, la demande de spectre étant associée à une entité consommatrice de spectre (106) ;
recevoir, en provenance d'une pluralité de noeuds de validation, une pluralité de votes basés sur la demande de spectre ;
déterminer d'accorder ou non la demande de spectre sur la base de la pluralité de votes ; et
en réponse à la détermination d'accorder la demande de spectre, attribuer l'attribution de spectre de radiofréquences disponible à l'entité consommatrice de spectre (106) ; **caractérisé en ce que**
le processeur électronique (202) est en outre configuré pour déterminer l'attribution de spectre de radiofréquences disponible par
récupération, à partir d'un registre distribué (114) contenant des informations sur le spectre de radiofréquences, d'une première transaction comprenant une attribution de spectre de radiofréquences proposée à partir du registre distribué (114) ;
réception, par l'intermédiaire de l'interface de communication (206), d'une pluralité de votes sur l'attribution de spectre de radiofréquences proposée à partir de la pluralité de noeuds de validation ; et
détermination, sur la base de la pluralité de votes sur l'attribution de spectre de radiofréquences proposée, si l'attribution de spectre de radiofréquences proposée doit être disponible pour des demandes.

2. Système (100) selon la revendication 1,
la détermination de l'attribution de spectre de radiofréquences disponible comprenant la détermination d'une pluralité de conditions associées à l'attribution de spectre de radiofréquences disponible ; et
la demande de spectre comprenant une indication que la pluralité de conditions sont acceptées.

3. Système (100) selon la revendication 2, la pluralité de conditions étant incluses dans un contrat intelligent associé à l'attribution de spectre de radiofréquences disponible.

4. Système (100) selon la revendication 1, le processeur électronique (202) étant en outre configuré pour, en réponse à la détermination d'accorder la demande de spectre, transmettre une clé d'authentification associée à l'attribution de spectre de radiofréquences disponible à l'entité consommatrice de spectre (106).

5. Système (100) selon la revendication 1, le processeur électronique (202) étant en outre configuré pour déterminer l'attribution de spectre de radiofréquences disponible en recevant, en provenance d'un serveur d'analyse de radiofréquences (112), une allocation de spectre sous-utilisée sélectionnée parmi une pluralité d'allocations de spectre existantes.

6. Système (100) selon la revendication 1, le processeur électronique (202) étant en outre configuré pour :
assigner une pondération à chacun de la pluralité de votes sur la base d'au moins un facteur sélectionné dans le groupe constitué d'un propriétaire du spectre, d'une analyse d'interférence, d'une capacité d'équipement, d'un type d'entité consommatrice de spectre (106), d'un type d'utilisateur, d'une règle commerciale, d'une zone de fonctionnement souhaitée et d'une puissance de sortie ; et
générer une pluralité de votes pondérés sur la base de la pluralité de votes et de la pondération de chacun de la pluralité de votes ;
la détermination d'accorder ou non la demande de spectre comprenant la détermination d'accorder ou non la demande de spectre sur la base de la pluralité de votes pondérés.

7. Système (100) selon la revendication 5, les informations de spectre de radiofréquences comprenant un historique de transaction pour des attributions de spectre effectuées par le serveur courtier de spectre (102).

8. Système (100) selon la revendication 1, le processeur électronique (202) étant en outre configuré pour recevoir la demande de spectre pour l'attribution de spectre de radiofréquences disponible en récupérant, à partir d'un registre distribué (114) contenant des informations de spectre de radiofréquences, une transaction.

9. Procédé (300) d'attribution de spectre de radiofréquences, le procédé (300) comprenant :
la détermination, à l'aide d'un processeur électronique (202), d'une attribution de spectre de radiofréquences disponible ;
la réception d'une demande de spectre pour le spectre de radiofréquences disponible en provenance d'une entité consommatrice de spectre (106) ;
la réception, en provenance d'une pluralité de noeuds de validation, d'une pluralité de votes basés sur la demande de spectre ;
la détermination d'accorder ou non la demande de spectre sur la base de la pluralité de votes ; et
en réponse à la détermination d'accorder la demande de spectre, l'attribution de l'attribution de spectre de radiofréquences disponible à l'entité consommatrice de spectre (106) ;
**caractérisé en ce que**
la détermination de l'attribution de spectre de radiofréquences disponible comprend
récupération, à partir d'un registre distribué (114) contenant des informations sur le spectre de radiofréquences, d'une première transaction comprenant une attribution de spectre de radiofréquences proposée à partir du registre distribué (114) ;
la réception d'une pluralité de votes sur l'attribution de spectre de radiofréquences proposée en provenance de la pluralité de noeuds de validation ; et
détermination, sur la base de la pluralité de votes sur l'attribution de spectre de radiofréquences proposée, si l'attribution de spectre de radiofréquences proposée doit être disponible pour des demandes.

10. Procédé (300) selon la revendication 9,
la détermination de l'attribution de spectre de radiofréquences disponible comprenant la détermination d'une pluralité de conditions associées à l'attribution de spectre de radiofréquences disponible ; et
la demande de spectre comprenant une indication que la pluralité de conditions sont acceptées.

11. Procédé (300) selon la revendication 9, comprenant en outre :
en réponse à la détermination d'accorder la demande de spectre, la transmission d'une clé d'authentification associée à l'attribution de spectre de radiofréquences disponible à l'entité consommatrice de spectre (106).

12. Procédé (300) selon la revendication 9, la détermination de l'attribution de spectre de radiofréquences disponible comprenant la réception, en provenance d'un serveur d'analyse de radiofréquences (112), d'une allocation de spectre sous-utilisée sélectionnée parmi une pluralité d'allocations de spectre existantes.

13. Procédé (300) selon la revendication 9, comprenant en outre :
l'assignation d'un poids à chacun de la pluralité de votes sur la base d'au moins un facteur sélectionné dans le groupe constitué d'un propriétaire du spectre, d'une analyse d'interférence, d'une capacité d'équipement, d'un type d'entité consommatrice de spectre (106), d'un type d'utilisateur, d'une règle commerciale, d'une zone de fonctionnement souhaitée et d'une puissance de sortie ; et
la génération d'une pluralité de votes pondérés sur la base de la pluralité de votes et de la pondération de chacun de la pluralité de votes ;
la détermination d'accorder ou non la demande de spectre comprenant la détermination d'accorder ou non la demande de spectre sur la base de la pluralité de votes pondérés.
